# EUROPÄISCHE PATENTANMELDUNG

(11) **EP 2 371 612 A1**
(43) Veröffentlichungstag der Anmeldung: **05.10.2011**
(21) Anmeldenummer: 10075145.2
(22) Anmeldetag: 31.03.2010
(51) Int. Cl.: B60L 11/18, G07F 15/00, G06Q 20/00

(54) **Ladesystem mit einer Stromtankstelle und Verfahren zur Interaktion zwischen Stromtankstelle und Nutzer**

(71) Anmelder: Deutsche Telekom AG, 53113 Bonn (DE)
(72) Erfinder: Hofmann, Klaus-Peter, DE-12205 Berlin (DE); Ren, Zhiyun, DE-12357 Berlin (DE)
(74) Vertreter: Drosch, Ulrich

(57) **Zusammenfassung**

Das beschriebene Ladesystem zur Aufladung von Akkumulatoren besteht aus einer Stromtankstelle (1), Bedienmitteln zur Bedienung der Stromtankstelle, Anzeigemitteln zur Anzeige von Statusinformationen zu einem Ladevorgang, aus computerbasierten, mit der Stromtankstelle (1) in einer Wirkverbindung stehenden Backendeinrichtungen (2) zur Tarifierung des zur Aufladung eines Akkumulators über die Stromtankstelle bezogenen Stroms und aus einem Netzwerk (4) für den Datenaustausch zwischen den Backendeinrichtungen (2) und der Stromtankstelle (1). Die Stromtankstelle (1) weist dabei mindestens eine Steckdose zur elektrischen Verbindung mit einem unter Nutzung der Stromtankstelle (1) aufzuladenden Akkumulator auf. Erfindungsgemäß handelt es sich bei den Bedienmitteln und/oder bei den Anzeigemitteln um ein internetfähiges Mobilfunkgerät (3) oder diese werden zumindest teilweise durch ein solches Mobilfunkgerät (3) ausgebildet. Das erfindungsgemäße Verfahren bezieht sich entsprechend auf die Bedienung einer Stromtankstelle (1) mittels eines Mobilfunkgeräts (3) und/oder die Anzeige von Statusinformationen der Stromtankstelle (1) auf einem solchen Mobilfunkgerät(3).

## Beschreibung

Ladesystem mit einer Stromtankstelle und Verfahren zur Interaktion zwischen Stromtankstelle und Nutzer sowie zu deren Ermöglichung

Die Erfindung betrifft eine Lösung zur Nutzung einer Stromtankstelle. Sie bezieht sich auf ein eine solche Stromtankstelle umfassendes Ladesystem zur Aufladung von Akkumulatoren und auf ein Verfahren zur Interaktion zwischen der betreffenden Stromtankstelle und einem Nutzer im Zusammenhang mit der Nutzung der Stromtankstelle. Vorteilhafte Weiterbildungen der Erfindung beziehen sich ferner auf die Authentifizierung gegenüber der Stromtankstelle zu deren Benutzung und somit zur Ermöglichung einer Interaktion zwischen dem Nutzer und der Stromtankstelle, insbesondere aber auch zum Zweck der Tarifierung der beispielsweise zur Aufladung eines Fahrzeugakkumulators von der Stromtankstelle bezogenen Ladestrommenge.

In der jüngeren Zeit ist die Entwicklung alternativer Antriebskonzepte für Kraftfahrzeuge zunehmend stärker in das Blickfeld der Automobilhersteller gerückt. Motivationen hierfür sind die als ökonomisch nachteilig anzusehende einseitige Abhängigkeit von fossilen Brennstoffen, die stärker erkennbar werdende Endlichkeit der Vorräte an solchen Brennstoffen und in zunehmendem Maße Zwänge des Klima- und Umweltschutzes. Dies hat insbesondere zu einer beschleunigten Entwicklung von Elektronantrieben geführt. Um die von den mit fossilen Treibstoffen betriebenen Fahrzeugen bekannte hohe Mobilität zu erhalten, führen die mit einem Elektroantrieb als ausschließlichem Antrieb oder als Zusatzantrieb ausgestatteten Fahrzeuge Akkumulatoren zur Energieversorgung des jeweiligen Elektroantriebs mit. Selbstverständlich ist deren Kapazität jedoch endlich, so dass auch strombetriebene Fahrzeuge nach Zurücklegen entsprechender Fahrstrecken gewissermaßen betankt werden müssen, das heißt ihre Akkumulatoren wieder aufgeladen werden müssen. Hierzu ist gegenwärtig in vielen Industriestaaten der Aufbau eines Netzes so genannter Stromtankstellen im Gange.

Abgesehen davon, dass die Reichweite derzeit verfügbarer Fahrzeuge mit Elektroantrieb im Allgemeinen geringer ist, als die von Fahrzeugen mit konventionellem Antrieb, besteht zumindest derzeit noch der Nachteil, dass das Aufladen der Fahrzeugakkumulatoren eine erheblich längere Zeit in Anspruch nimmt, als die Betankung mit fossilen Brennstoffen betriebener Fahrzeuge. Daher muss ein mit einem Elektroantrieb ausgestattetes Fahrzeug zur Wiederaufladung seiner Akkumulatoren in der Regel für längere Zeit, das heißt häufig mehrere Stunden, mit einer entsprechenden Stromtanksäule beziehungsweise Stromtankstelle gekoppelt werden. Bei derartigen Stromtankstellen handelt es sich um speziell gesicherte Steckdosen, die beispielsweise auf entsprechend gekennzeichneten Parkplätzen oder in Parkhäusern errichtet werden. Die Sicherung einer solchen Steckdose erfolgt dabei so, dass ein sie zur Strombetankung seines Fahrzeugs nutzender Kunde einen physikalischen Zugang zu der Steckdose erst nach erfolgter Authentisierung und Autorisierung durch das System erhält. Die Authentisierung erfolgt beispielsweise im Rahmen einer Online-Verbindung der entsprechenden Stromtankstelle mit einem Backend-System über eine gesicherte Verbindung. Über diese gesicherte Verbindung werden Daten zur Identität des jeweiligen Kunden an das Backend-System übermittelt. Ferner werden während des Ladevorgangs kontinuierlich Stromverbrauchsdaten an das Backend-System übertragen.

Nach Beendigung des Ladevorgangs wird der Gesamtstromverbrauch für den Ladevorgang zur Berechnung des dafür zu entrichtenden Entgelts an das Backend-System übertragen. Vor der ersten Benutzung einer Stromtankstelle meldet sich der Kunde zum Beispiel über das Internet bei dem die Stromtankstelle betreibenden Unternehmen an und wird dort registriert. Die Abrechnung des für einen Ladevorgang zu entrichtenden Entgelts erfolgt häufig postpaid, das heißt per Rechnung oder Bankeinzug. Zu seinem bei dem Betreiber von Stromtankstellen geführten Nutzerkonto erhält der Kunde bei seiner Registrierung im Allgemeinen eine Nutzer-ID und ein Passwort oder dergleichen, mittels welcher er auf das Nutzerkonto zugreifen kann. Viele Systeme sind zudem so gestaltet, dass der Kunde ein zusätzliches Sicherheitstoken, vorzugsweise in Form einer Smartcard, erhält, mittels welchem er sich zur Durchführung eines Betankungsvorgangs bei der jeweiligen Stromtankstelle authentifizieren muss. Vorzugsweise kommen hierbei Smartcards mit einen Chip für die Nahfeldkommunikation (NFC = Near Field Communication) zum Einsatz. Alternativ ist aber auch eine Authentifizierung durch die Eingabe eines Passworts über die Tastatur einer entsprechend ausgestatteten Stromtankstelle möglich. Die Stromtankstellen selbst können dabei, auch im Hinblick auf die schon angesprochenen unterschiedlichen Arten der von ihnen unterstützten Authentifizierungsverfahren, sehr unterschiedlich gestaltet sein. Dies reicht gewissermaßen von der einfachen Säule mit im Wesentlichen einer elektronisch gesicherten Steckdose und einer Online-Verbindung zu einem Backend-System bis hin zu für den Nutzer sehr komfortabel gestalteten Säulen mit Tastatur und Display beziehungsweise Bildschirm. Bei den erstgenannten, einfachen Varianten sind dabei für den Nutzer weitergehende Konfigurationsmöglichkeiten im Allgemeinen nicht gegeben. Hingegen lassen es komfortabler gestaltete Varianten zu, beispielsweise die Menge des bei der "Betankung" bezogenen Stroms durch die Festlegung eines Höchstbetrages für das Entgelt zu limitieren. Darüber hinaus sind auch Konzepte bekannt, nach denen der Kunde festlegen kann, dass sein Fahrzeug in lastarmen und damit entgeltgünstigen Zeiträumen betankt und/oder dessen Akkumulator gewissermaßen als Zwischenspeicher genutzt wird, welcher seinerseits in Hochlast- beziehungsweise Spitzenlastzeiten wieder Energie in das Stromnetz einspeist. Letzteres macht insbesondere vor dem Hintergrund der schon angesprochenen, ohnehin gegebenen langen Verweildauer der Fahrzeuge an den Stromtankstellen Sinn. Der Kunde beziehungsweise der Fahrzeugbesitzer wird sich dabei daran orientieren, entsprechende Ladevorgänge oder die gegebenenfalls erfolgende teilweise Wiederentladung der Akkumulatoren zum Zweck der Netzeinspeisung in Zeiträumen durchzuführen, in denen er das Fahrzeug nicht benötigt.

Um für den Kunden dennoch eine gewisse Flexibilität zu erhalten, ist es dabei wünschenswert, dass dieser die Möglichkeit hat, Informationen zum Ladezustand des Akkumulators auch dann zu erhalten, wenn er sich nicht am Fahrzeug aufhält und vorzugsweise darüber hinaus die von ihm vorgenommene Konfiguration der Stromtankstelle im Bedarfsfall aus der Ferne zu ändern. Hierfür wird beispielsweise durch die US 5,563,491 eine entsprechende Lösung beschrieben, nach welcher der Kunde nach der Einleitung des Betankungsvorgangs einen so genannten Remote-Receiver aus der betreffenden Stromtankstelle entnehmen und mit sich führen kann, mittels welchem er beispielsweise den Ladestatus des Akkumulators auch von einem entfernt gelegenen Aufenthaltsort abfragen kann. Jedoch handelt es sich hierbei um eine proprietäre Lösung. Zudem handelt es sich bei dem genannten Remote-Receiver um ein zusätzlich vom Kunden mitzuführendes Gerät.

Aufgabe der Erfindung ist es, eine universelle Lösung für die flexible Benutzung von Stromtankstellen anzugeben, welche eine Fernabfrage des Ladezustands der zu beladenden Akkumulatoren und/oder eine fernbedienbare Konfiguration von Ladeparametern und Bedingungen ermöglicht. Hierzu sind ein Verfahren und ein zur Umsetzung des entsprechenden Verfahrens geeignetes System anzugeben beziehungsweise bereitzustellen.

Die Aufgabe wird durch ein Ladesystem mit den Merkmalen des Patentanspruchs 1 gelöst. Ein die Aufgabe lösendes Verfahren zur Interaktion zwischen einer Stromtankstelle zur Aufladung von Akkumulatoren und einem Nutzer dieser Stromtankstelle wird durch den ersten verfahrensbezogenen Anspruch charakterisiert. Vorteilhafte aus- beziehungsweise Weiterbildungen der Erfindung sind durch die jeweiligen Unteransprüche gegeben.

Das die Aufgabe lösende Ladesystem zur Aufladung von Akkumulatoren besteht aus der eigentlichen Stromtankstelle, an welcher das Aufladen erfolgt, aus Bedienmitteln zur Bedienung der Stromtankstelle, Anzeigemitteln zur Anzeige von Statusinformationen zu einem Ladevorgang, aus computerbasierten, mit der Stromtankstelle in einer Wirkverbindung stehenden Backendeinrichtungen und aus einem Netzwerk für den Datenaustausch zwischen den Backendeinrichtungen und der Stromtankstelle. Mit Hilfe der vorgenannten Backendeinrichtungen, welche beispielsweise durch den Betreiber eines Netzes von Stromtankstellen unterhalten werden, erfolgt insbesondere die Tarifierung der zur Aufladung eines Akkumulators über eine jeweilige Stromtankstelle bezogenen Strommenge. Darüber hinaus können diesen Backendeinrichtungen Aufgaben im Zusammenhang mit der Autorisierung eines Nutzers an einer Stromtankstelle zugewiesen sein. Die Stromtankstelle selbst weist mindestens eine Steckdose zur elektrischen Verbindung mit einem unter Nutzung der Stromtankstelle aufzuladenden Akkumulator auf. Vorzugsweise ist diese mindestens eine Steckdose, wie aus dem Stand der Technik bekannt, für einen Ladevorgang zunächst freizuschalten.

Erfindungsgemäß handelt es sich bei den Bedienmitteln für die Stromtankstelle und/oder bei den Anzeigemitteln um ein internetfähiges Mobilfunkgerät oder die genannten Mittel sind zumindest teilweise durch ein solches Mobilfunkgerät ausgebildet. Letzteres schließt dabei nicht aus, dass Bedienvorgänge durch den Nutzer teilweise auch an der Stromtankstelle beziehungsweise der Tanksäule selbst ausgeführt werden können oder müssen beziehungsweise dass einen Ladevorgang betreffende Statusinformationen auch an der betreffenden Tanksäule über ein an dieser ausgebildetes Display oder sonstige Anzeigemittel ausgegeben werden. Vorzugsweise erfolgt jedoch die Bedienung der Stromtankstelle ausschließlich mittels des vorgenannten Mobilfunkgeräts (beispielsweise eines Smartphones), wobei dieses darüber hinaus vorzugsweise das einzige Anzeigemittel darstellt. Das heißt, dass vorzugsweise an der Stromtankstelle beziehungsweise einer entsprechenden Tanksäule weder eine Tastatur, noch ein Display erforderlich sind. Hierdurch wird vorteilhafterweise für gegebenenfalls Tausende von Stromtankstellen teure Hardware, wie sie beispielsweise ein vandalismussicheres Display und eines Tastatur darstellen, eingespart.

Bei den vorstehend genannten Statusinformationen handelt es sich beispielsweise um Informationen über Betriebszustände der Stromtankstelle, Informationen zu Ladeparametern oder Informationen zum Fortschritt eines Ladevorgangs. In seiner Eigenschaft als Bedieneinrichtung oder Bestandteil der Bedienmittel ist das Mobilfunkgerät vorzugsweise als eine Fernbedienungseinheit für die Stromtankstelle ausgebildet, mittels welcher diese von beliebig entfernter Stelle bedienbar ist. Selbstverständlich wird hierbei eine Verfügbarkeit des den Internetzugang für das Mobilfunkgerät ermöglichenden Netzes vorausgesetzt. Dabei macht es sich die Erfindung zunutze, dass heutzutage ohnehin fast jeder Kraftfahrer auch ein Mobilfunkgerät mit sich führt.

Entsprechend einer besonders bevorzugten Ausbildungsform ist die Stromtankstelle mittels des Mobilfunkgeräts auch bezüglich der Parameter eines Ladevorgangs und/oder der Begrenzung der bei einem Ladevorgang zu beziehenden Ladestrommenge konfigurierbar. So kann es beispielsweise dem Nutzer beziehungsweise Kunden ermöglicht sein, für den Ladevorgang vorzugeben, dass zur Aufladung des Akkumulators nur eine im Hinblick auf das dafür zu entrichtende Entgelt begrenzte Strommenge bezogen werden soll. Darüber hinaus ist es denkbar, dass der Nutzer im Zuge der eingangs angesprochenen Möglichkeit einer Nutzung von Fahrzeugakkumulatoren zur Zwischenspeicherung später wieder in das Netz einzuspeisender Elektroenergie festlegt, dass der von ihm zur Beladung mit der Stromtankstelle verbundene Akkumulator innerhalb einer von ihm bestimmten Zeitspanne (beispielsweise während eines nächtlichen Ladevorgangs) für den genannten Zweck zur Verfügung stehen darf. Im Zusammenhang mit diesem zuletzt genannten Beispiel kann dabei aber auch für den Nutzer über das von ihm mitgeführte Mobilfunkgerät eine Eingriffsmöglichkeit derart gegeben sein, dass er aus der Ferne festlegt, dass die von ihm erteilte Erlaubnis zur Nutzung des zu ladenden Akkumulators als Zwischenspeicher vorfristig aufgehoben wird, weil der Kunde beispielsweise aufgrund geänderter Termine sein Fahrzeug eher benötigt als zunächst angenommen. Genau im Hinblick auf derartige Überlegungen wird der Vorteil des erfindungsgemäßen Systems besonders deutlich. Insbesondere ist es dem Nutzer möglich, sehr flexibel auf den Ladevorgang Einfluss zu nehmen, ohne dass er sich dafür jeweils vor Ort, das heißt zur Stromtankstelle begeben oder ein gesondertes Gerät mit sich führen müsste. In diesem Zusammenhang ist daher nochmals ausdrücklich darauf hinzuweisen, dass unter einer Bedienung beziehungsweise Fernbedienung der Stromtankstelle im Sinne der Erfindung auch die Möglichkeit verstanden werden soll, mittels des zum Ladesystem gehörenden Mobilfunkgeräts einen mit der Stromtankstelle letztlich zum Zweck seiner Aufladung verbunden Akkumulator zumindest vorübergehend für eine Entladung durch den Stromnetzbetreiber zur Kompensation von Spitzenlasten des Stromnetzes freizugeben. In diesem Fall erhält der Nutzer der Stromtankstelle beziehungsweise der Besitzer des entsprechenden Mobilfunkgeräts vorzugsweise eine Gutschrift vom Stromnetzbetreiber.

Für ein Ladesystem, bei welchem die Bedienung der Stromtankstelle zum Aufladen eines Akkumulators an eine Autorisierung eines jeweiligen Nutzers gebunden ist, wobei sich der Nutzer hierfür mittels eines Token an der dazu mit einer NFC-Schnittstelle für die Nahbereichskommunikation ausgestatteten Stromtankstelle authentifizieren muss, ist eine besonders vorteilhafte Ausgestaltung der Erfindung dadurch gegeben, dass hierfür die SIM-Karte des als Bedienmittel oder als Bestandteil der Bedienmittel fungierenden Mobilfunkgeräts genutzt wird. Dabei ist das betreffende Mobilfunkgerät ebenfalls mit einer NFC-Schnittstelle ausgestattet. Die von dem Mobilfunkgerät aufgenommene UICC (Universal Integrated Circuit Card = universelle Karte mit integriertem Chip) in Form der auch für die Authentifizierung gegenüber dem Mobilfunkanbieter genutzten SIM-Karte bildet dabei das für die Authentifizierung an der Stromtankstelle erforderliche Token aus. Dieses Token beziehungsweise das mit der entsprechenden UICC und der NFC-Schnittstelle ausgestattete Mobilfunkgerät wird dazu von dem betreffenden Nutzer in die Nähe der Stromtankstelle beziehungsweise Tanksäule gehalten. Im Wege der Nahbereichskommunikation werden dann, veranlasst durch eine spezielle, auf der UICC zur Nutzung transaktionsbasierter Dienste gehaltene Anwendung, Kundendaten, welche als Bestandteil der genannten Anwendung auf der SIM-Karte abgelegt sind, an die Stromtankstelle übertragen. Eine entsprechende Überprüfung der Daten erfolgt dann durch Einrichtungen der Stromtankstelle selbst oder durch die mit ihr in einer Wirkverbindung stehenden Backendeinrichtungen. Ist der betreffende Nutzer dem Betreiber der Stromtankstelle aufgrund einer entsprechenden zuvor erfolgten Registrierung bekannt, wird er zur Nutzung der Stromtankstelle autorisiert, indem eine entsprechende Steckdose zur Abgabe von Strom freigeschaltet wird, das heißt eine personalisierte Freigabe der Stromsteckdose für den insoweit angemeldeten Nutzer erfolgt. Die Authentifizierung des Kunden beziehungsweise Nutzers erfolgt dabei vorzugsweise im Hinblick auf die spätere Tarifierung der zur Aufladung eines jeweiligen Akkumulators bezogenen Strommenge. Vorzugsweise ist es im Hinblick darauf möglich, dass auf der UICC des Kunden mehrere Anwendungen gehalten werden, welche ihm eine Authentifizierung gegenüber Stromtankstellen verschiedener Betreiber ermöglichen. Die insoweit zusammen mit der sie aufnehmenden UICC jeweils als Token fungierenden Anwendungen können dabei gegebenenfalls unter einer gemeinsamen Oberfläche einer ebenfalls auf der UICC gespeicherten Managementsoftware verwaltet werden.

Gemäß einer besonders bevorzugten Weiterbildung der Erfindung sind in das Ladesystem außerdem elektronische Einrichtungen mindestens eines Mobilfunknetzbetreibers eingebunden. Unter Nutzung dieser Einrichtungen des Mobilfunknetzbetreibers wird dabei die eine Authentifizierung gegenüber der Stromtankstelle ermöglichende Anwendung auf die UICC des hierfür durch den Kunden genutzten Mobilfunkgeräts übertragen. Der Nutzer meldet sich demnach beispielsweise an einem Internetportal eines Stromanbieters beziehungsweise Stromtankstellenbetreibers an. Im Rahmen dieser Anmeldung macht er Angaben zu seinen persönlichen Daten. Dazu gehören insbesondere auch die Informationen, dass der Nutzer ein NFC-fähiges Mobilfunkgerät besitzt und dieses Mobilfunkgerät eindeutig identifizierender Daten, wie zum Beispiel dessen MSISDN. Daraufhin beauftragt der Stromanbieter ein Trust-Zentrum beziehungsweise seinen Trusted Service Manager, das Mobilfunkgerät des betreffenden Kunden zu provisionieren, dieses also als Authentifizierungsmittel gegenüber den Stromtankstellen des entsprechenden Stromanbieters nutzbar zu machen. Hierzu werden durch den Trusted-Servicemanager unter Nutzung der bereits angesprochenen Einheiten des Mobilfunkbetreibers eine Authentisierungsanwendung und entsprechende Daten auf die UICC des von dem Nutzer künftig zur Nutzung der betreffenden Stromtankstellen zu verwendenden Mobilfunkgeräts übertragen. Der Nutzer kann von nun an sein Mobilfunkgerät als Authentisierungstoken gegenüber den betreffenden Stromtankstellen verwenden.

Die Erfindung kann ferner dadurch weitergebildet sein, dass eine oder mehrere auf der UICC des Mobilfunkgeräts gehaltene Anwendungen zur Nutzung transaktionsbasierter Dienste, als Bezahlanwendung für den bargeldlosen Zahlungsverkehr ausgebildet sind. In diesem Falle dient das Mobilfunkgerät sowohl zur Authentifizierung als Voraussetzung zur Nutzung der Stromtankstelle als auch für eine bargeldlose Bezahlung der jeweils von der Stromtankstelle bezogenen Strommenge. Die Backendeinrichtungen des erfindungsgemäßen Systems umfassen dabei Einrichtungen eines entsprechenden bargeldlosen Bezahlsystems. Das Mobilfunkgerät unterstützt demgemäß eine Kette von Anwendungen, welche, beginnend mit der Freigabe der Stromdose (nach entsprechender Authentifizierung), über die Fernüberwachung der Stromtankstelle und deren Konfiguration zur Steuerung eines jeweiligen Ladevorgangs bis hin zur Abrechnung der bezogenen Strommenge reicht. Gemäß der letztgenannten Weiterbildung des Ladesystems werden vorzugsweise die auf der UICC des Mobilfunkgeräts gehaltenen Anwendungen für die Nutzung transaktionsbasierter Dienste zur Auswahl durch den Nutzer auf einem graphischen Benutzerinterface des Mobilfunkgerätes als elektronische Brieftasche animiert. Die zur Nutzung eines entsprechenden Dienstes zu verwendende Bezahlanwendung wird demgemäß auf einem Display eines graphischen Benutzerinterfaces des Mobilfunkgerätes graphisch symbolisiert. Durch Antippen des gegebenenfalls berührungsempfindlich ausgebildeten Displays oder mittels eines anderen, mit dem Display des graphischen Benutzerinterfaces interagierenden Benutzerinterfaces kann dabei der Nutzer/Kunde die gewünschte beziehungsweise an der jeweiligen Stromtankstelle akzeptierte Bezahlanwendung auswählen. Die Bezahlung der vom Kunden bezogenen Strommenge muss demgemäß nicht postpaid erfolgen, sondern sie kann unter Nutzung des Mobilfunkgeräts vielmehr auch nach einem Prepaid-Verfahren erfolgen. Sie kann zudem zum Beispiel durch eine auf der UICC gespeicherte Bezahlanwendung analog einer Bezahlung mit einer Kreditkarte erfolgen. Dabei besteht ein Vorteil darin, dass keine direkte beziehungsweise dauerhafte Kundenbeziehung des Nutzers zum Betreiber der Stromtankstelle erforderlich ist, sondern der Kunde jede entsprechend ausgestattete Stromtankstelle spontan nutzen kann. In diesem Zusammenhang kann die gemäß einer bereits erläuterten Möglichkeit mittels der Einrichtungen eines Mobilfunkbetreibers erfolgende Provisionierung des Mobilfunkgeräts beziehungsweise seiner UICC alternativ auch spontan erfolgen. Dies kann zum Beispiel geschehen, indem RFID-Tags (Radio Frequency Identification) mit entsprechenden NDEF-Records (Near Field Communication Data Exchange Format) an der Stromtankstelle angebracht werden, welche der Kunde zur Nutzung der Stromtankstelle mittels seines zum erfindungsgemäßen System gehörenden Mobilfunkgeräts (beispielsweise eines Smartphones) ausliest, durch welches daraufhin der Provisionierungsprozess über den Aufruf einer entsprechenden Provisionierungs-Web-Seite angestoßen wird. Dabei ist auch eine anderer als der im Zusammenhang mit der Provisionierung durch Einrichtungen eines Mobilfunkbetreibers bereits erläuterte Ablauf der Authentifizierung des Nutzers gegenüber der Stromtankstelle möglich. Entsprechend dieser Möglichkeit wird die Kennzeichnung/ID der Stromsteckdose auf einem RFID-Tag beziehungsweise NFC-Tag gespeichert. Das NFC-fähige Mobilfunkgerät liest diese ID aus, holt ferner die Kunden-ID aus der UICC und schickt die entsprechenden Daten per UMTS verschlüsselt an die Backendeinrichtungen. Wenn die Kunden-ID von diesen als gültig erkannt wird, wird die Stromdose für den betreffenden Nutzer von den Backendeinrichtungen freigeschaltet. In diesem Fall kommuniziert das Mobilfunkgerät demnach für die Authentisierung direkt mit den Backendeinrichtungen.

Korrespondierend mit dem zuvor erläuterten erfindungsgemäßen System ist das zur Lösung der Aufgabe vorgeschlagene Verfahren für die Interaktion zwischen einer Stromtankstelle zur Aufladung von Akkumulatoren und einem Nutzer der betreffenden Stromtankstelle dadurch gekennzeichnet, dass diese Interaktion zumindest teilweise über ein von dem Nutzer mitgeführtes Mobilfunkgerät erfolgt. Dabei werden durch den betreffenden Nutzer mittels des besagten Mobilfunkgeräts Bedienvorgänge zur Nutzung der Stromtankstelle ausgeführt und/oder während des Bestehens einer Verbindung zur Übertragung von Ladestrom von der Stromtankstelle zu einem aufzuladenden Akkumulator Statusinformationen zum Ladevorgang auf das Mobilfunkgerät übertragen. Die Übertragung entsprechender Statusinformationen erfolgt dabei je nach Verfahrensregime entweder ohne weitere Veranlassung durch den Nutzer oder aber aufgrund eines Abrufs der entsprechenden Informationen durch den Nutzer mittels des Mobilfunkgeräts. Besonders bevorzugte Weiterbildungen des Verfahrens bestehen darin, dass der Nutzer mittels des von ihm mitgeführten Mobilfunkgeräts Parameter des Ladevorgangs einstellt und/oder eine Begrenzung der für einen Ladevorgang zu beziehenden Ladestrommenge veranlasst. Vorzugsweise verwendet er außerdem das Mobilfunkgerät zur Authentifizierung gegenüber der Stromtankstelle. Der zur Interaktion erforderliche Datenaustausch erfolgt dabei zumindest teilweise über das Mobilfunknetz, nämlich soweit wie die Interaktion mittels des Mobilfunkgeräts und nicht aufgrund der gegebenenfalls alternativ möglichen Benutzung direkt an der Tanksäule beziehungsweise Stromtankstelle ausgebildeter Ein- und Ausgabemittel erfolgt. Darüber hinaus kann der Datenaustausch auch über dann am Mobilfunkgerät und an der Stromtankstelle vorzusehende NFC-Schnittstellen erfolgen. Letzteres bezieht sich insbesondere auch auf die schon angesprochene Möglichkeit einer Authentifizierung des Nutzers mittels eines entsprechend ausgebildeten Mobilfunkgeräts, wobei in diesem Kontext die Authentifizierung als Teil der Bedienung, also als ein der eigentlichen Nutzung der Stromtankstelle vorgelagerter Bedienvorgang aufgefasst werden soll. Neben Authentifizierungsdaten können aber, sofern sich der Nutzer noch in der Nähe der Stromtankstelle aufhält, nach erfolgter Authentifizierung je nach Ausgestaltung auch weitere Daten zwischen der Stromtankstelle und dem Mobilfunkgerät ausgetauscht werden, also beispielsweise auch Statusinformationen von der Stromtankstelle auf das Mobilfunkgerät übertragen werden. Die Bedienung der Stromtankstelle und die Darstellung den Ladevorgang und/oder den Betriebszustand der Stromtankstelle betreffender Informationen erfolgen gemäß der Erfindung vorzugsweise im Rahmen einer von dem dazu genutzten Mobilfunkgerät verarbeiteten lokalen Anwendung (zum Beispiel Java MIDIet) beziehungsweise Browseranwendung, welche gegebenenfalls auch zur Zahlung genutzt wird.

Anhand von Zeichnungen sollen nachfolgend die Erfindung und die Möglichkeiten ihrer Ausprägung nochmals beispielhaft erläutert werden. Durch die zugehörigen Zeichnungen werden in Form schematischer Strukturschaubilder sowohl anordnungsbezogene, also das System betreffende Aspekte verdeutlicht. Die Zeichnungen zeigen im Einzelnen:
- Fig. 1:: ein Schema einer grundsätzlichen Ausbildungsform der Erfindung,
- Fig. 2:: eine Weiterbildung der in der Fig. 1 dargestellten Ausbildungsform,
- Fig. 3:: eine besonders vorteilhafte Weiterbildung der Erfindung.

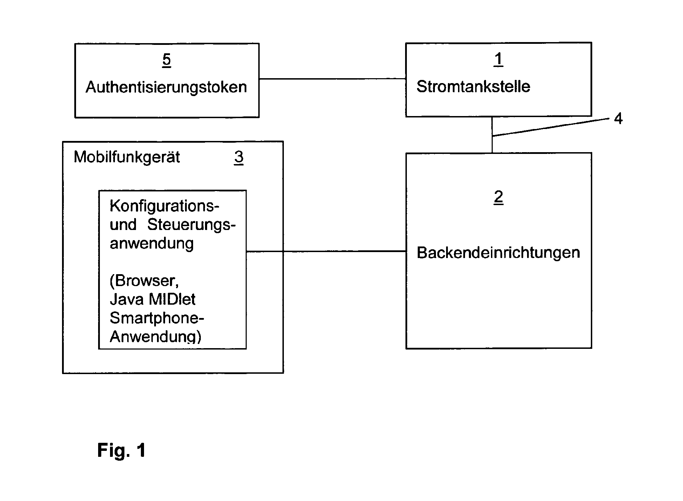

In der Fig. 1 ist das Grundprinzip der Erfindung beziehungsweise eine grundsätzliche Ausbildungsform in einem schematischen Strukturschaubild dargestellt. Symbolisiert sind hier die wesentlichen Komponenten des erfindungsgemäßen Systems, bei welchem es sich um eine Stromtankstelle 1 mit zugehörigen, über ein Netzwerk 4 verbundenen, insbesondere der Tarifierung des zum Aufladen eines Akkumulators verbrauchten Stroms dienenden Backendeinrichtungen 2 und um ein Mobilfunkgerät 3 handelt, welches zur Bedienung der Stromtankstelle 1 und zur Darstellung von Statusinformationen zu einem Ladevorgang dient. Das dargestellte Strukturschaubild geht von einer Ausbildungsform aus, bei welcher es, wie auch aus dem Stand der Technik bekannt, erforderlich ist, dass sich ein jeweiliger Nutzer der Stromtankstelle 1 gegenüber dieser mittels eines entsprechenden Token 5 authentifiziert. Nur im Falle einer erfolgreichen Authentifizierung wird der Nutzer zur Nutzung der Stromtankstelle 1 autorisiert, das heißt für ihn eine mit dem aufzuladenden Akkumulator zu verbindende Steckdose der Stromtankstelle 1 freigeschaltet. Gemäß dem in der Fig. 1 dargestellten Beispiel bedient sich dabei der jeweilige Nutzer zur Authentifizierung eines von ihm gesondert mitzuführenden Tokens 5, wie beispielsweise einer Chipkarte. Zur Authentifizierung hält er die betreffende Chipkarte, welche mit einer NFC-Schnittstelle für die Nahbereichskommunikation ausgestattet ist, in die Nähe der mit einer ebensolchen Schnittstelle ausgestatteten Stromtankstelle 1. Die zur Authentifizierung dienende Chipkarte hat der Nutzer vorzugsweise vom Betreiber der Stromtankstelle 1 erhalten, nachdem er sich beispielsweise über ein Internetportal des Betreibers bei diesem für die Nutzung entsprechender Stromtankstellen angemeldet und registriert hat. Die Überprüfung der auf der Chipkarte zur Authentifizierung des Nutzers gespeicherten Daten kann dabei, je nach Ausgestaltung des Systems, durch entsprechende Einrichtungen der Stromtankstelle 1 selbst erfolgen oder die Daten werden von der Stromtankstelle zunächst an die zugehörigen Backendeinrichtungen 2 übertragen und dort überprüft. Insoweit kommen den Backendeinrichtungen 2 in Abhängigkeit von der konkreten Ausgestaltung des Systems gegebenenfalls unterschiedliche Funktionen zu. Insbesondere dienen sie jedoch, wie bereits angesprochen, zur Tarifierung des jeweils bei einem Ladevorgang verbrauchten Stroms.

Der Nutzer der Stromtankstelle 1 führt ein Mobilfunkgerät 3 mit sich, mit dessen Hilfe er die Stromtankstelle 1 bedienen beziehungsweise einzelne von dieser zur Verfügung gestellte Funktionen steuern kann. Dies schließt indes nicht aus, dass parallel beziehungsweise alternativ dazu auch eine Bedienung der Stromtankstelle über eine Tastatur, einen Touchscreen oder eine andere unmittelbar an der Stromtankstelle 1 angeordnete Bedieneinrichtung ermöglicht ist. Vorzugsweise umfassen die mittels des Mobilfunkgeräts 3 gegebenen Bedienmöglichkeiten neben Eingaben zum Start eines Ladevorgangs auch Eingaben zur Konfiguration der Stromtankstelle 1. Denkbar ist es in diesem Zusammenhang beispielsweise, dass der Nutzer mittels des von ihm mitgeführten Mobilfunkgeräts Ladeparameter für den Ladevorgang und/oder die für einen solchen Ladevorgang maximal von der Stromtankstelle 1 zu beziehenden Strommenge einstellt. Letzteres bietet dem Nutzer zum Beispiel die Möglichkeit, das Ladeverhalten an den jeweils aktuellen Strompreis anzupassen und so, beispielsweise im Falle eines außerordentlich hohen Strompreises, die Kosten durch Abnahme einer nur geringen Strommenge zu begrenzen. Darüber hinaus ist es denkbar, dass der Nutzer im Rahmen einer entsprechenden Bedienung vorgibt, dass der zu ladende Akkumulator in ein Laderegime einbezogen werden darf, bei welchem er als Pufferspeicher arbeitet und im Falle eines längeren Verbleibs an der Stromtankstelle 1 zeitweise auch wieder Strom zurück in das Netz einspeist. Mit Hilfe über das Netzwerk von der Stromtankstelle 1 zu den Backendeinrichtungen 2 übertragener Informationen, welche schließlich von den Backendeinrichtungen 2 über ein Mobilfunknetz auf das Mobilfunkgerät 3 des Nutzers übertragen werden, ist es dem Nutzer möglich, sich auch an entfernter Stelle jederzeit über Betriebszustände der Stromtankstelle 1 und den Fortschritt des Ladevorgangs zu informieren. Die Bedienung, einschließlich der eventuell gegebenen Möglichkeit einer Konfiguration der Stromtankstelle 1, sowie die Anzeige der Statusinformationen für einen entsprechenden Ladevorgang auf dem Mobilfunkgerät erfolgen vorzugsweise im Rahmen einer durch das Mobilfunkgerät 3 unterstützten Browseranwendung.

Unter Verwendung der Konfiguration gemäß Fig. 1 vollzieht sich demnach bei der Nutzung der Stromtankstelle 1 beispielsweise folgender Ablauf:
- Der Nutzer meldet sich mit seinem der Authentifizierung dienenden Token 5 (zum Beispiel Chipkarte) an der Stromtankstelle 1 an.
- Der Nutzer ruft die Konfiguration der Stromtankstelle 1 auf seinem Internetfähigen Mobilfunkgerät 3 auf (Ausprägung als Web-Anwendung im Browser, Java MIDIet oder als Smartphone-Anwendung). Dazu wird eine IP-Verbindung zu den Backendeinrichtungen 2 des Stromanbieters beziehungsweise Stromtankstellenbetreibers aufgebaut.
- Der Nutzer kann dann über das Display seines Mobilfunkgeräts 3 den Ladevorgang konfigurieren.

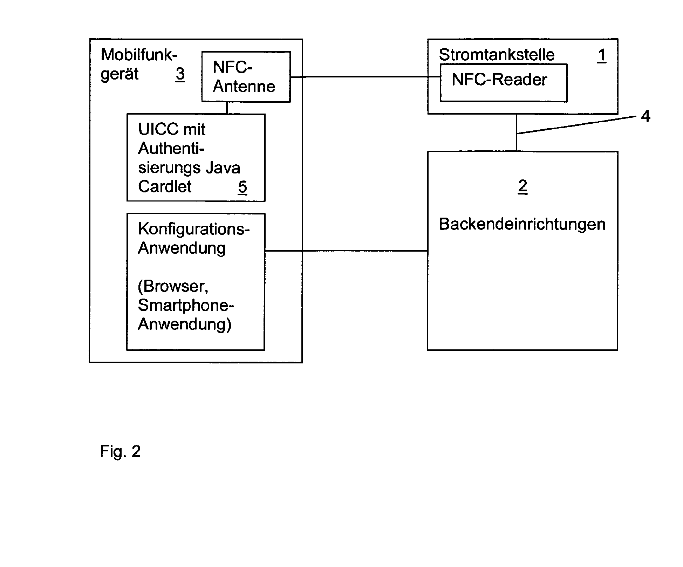

Die beiden letztgenannten Schritte können dabei beliebig wiederholt werden. Das in der Fig. 2 dargestellte Strukturschaubild veranschaulicht eine Weiterbildung des Ausbildungsbeispiels gemäß der Fig. 1, bei welcher auch die Authentifizierung eines Nutzers gegenüber der Stromtankstelle 1 mittels des Mobilfunkgeräts 3 ermöglicht ist. Hierfür verfügt das Mobilfunkgerät 3 ebenso wie die Stromtankstelle über eine NFC-Schnittstelle. Die in Form einer SIM-Karte von dem Mobilfunkgerät aufgenommene UICC (Universal Integrated Circuit Card) dient dabei einerseits, wie bei Mobilfunkgeräten 3 grundsätzlich bekannt und üblich, zur Authentifizierung gegenüber einem Mobilfunknetzbetreiber zur Nutzung des entsprechenden Mobilfunknetzes. Im Kontext der Erfindung bildet aber die UICC darüber hinaus ein zur Authentifizierung gegenüber der Stromtankstelle 1 nutzbares Token 5 aus. Der Nutzer hält demnach zur Authentifizierung gegenüber der Stromtankstelle 1 nicht eine gesonderte Chipkarte, sondern sein Mobilfunkgerät in die Nähe der betreffenden Stromtankstelle beziehungsweise Stromtanksäule. Nach erfolgreicher Authentifizierung sind unter Nutzung des Mobilfunkgeräts 3 dieselben Bedienmöglichkeiten sowie dieselben Möglichkeiten zum Erhalt von Statusinformationen zum Ladevorgang auf dem Mobilfunkgerät 3 gegeben wie sie mit Bezug auf die Fig. 1 dargestellt wurden.

Gemäß der Konfiguration nach der Fig. 2 gestaltet sich der Ablauf bei der Nutzung der Stromtankstelle 1 beispielsweise wie folgt:
- Der Nutzer hält sein NFC-fähiges Mobilfunkgerät 3 vor eine entsprechende Leseeinrichtung der NFC-Schnittstelle der Stromtankstelle 1.
- Die Stromtankstelle 1 liest die Nuterkennung aus der als Token 5 fungierenden UICC aus und authentifiziert die UICC (wobei die Authentifizierung, wie zuvor in der Beschreibung dargestellt gegebenenfalls auch anders erfolgen kann).
- Bei erfolgreicher Authentifizierung der UICC meldet die Stromtankstelle 1 die Nutzerkennung an die Backendeinrichtungen 2. Der Ladevorgang kann beginnen.

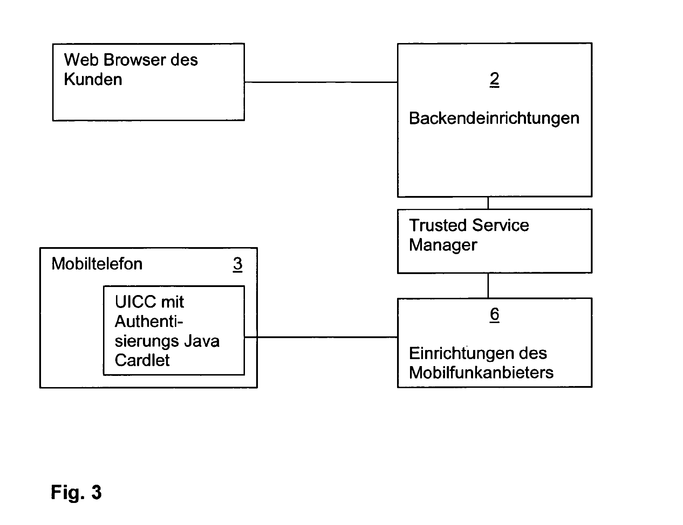

In einer anderen Ausprägung leitet die Stromtankstelle 1 die Daten für Authentifizierung an die Backendeinrichtungen 2 weiter, so dass dort die eigentliche Überprüfung der UICC stattfindet. Der weitere Ablauf gestaltetet entsprechend den letzten beiden Punkten des zur Fig. 1 erläuterten Ablaufs Die in der Fig. 3 schematisch dargestellte Weiterbildung geht noch einen Schritt weiter. Hier werden in das erfindungsgemäße Konzept zur Nutzung der Stromtankstelle elektronische Einrichtungen 6 mindestens eines Mobilfunknetzbetreibers einbezogen. Entsprechend diesem Konzept ist es vorgesehen, dass nach der beispielsweise über ein Internetportal erfolgenden Registrierung des Nutzers durch die vorgenannten Einrichtungen 6 des Mobilfunknetzbetreibers die zur Nutzung der UICC in dem Mobilfunkgerät beziehungsweise der SIM-Karte für die Authentifizierung gegenüber der Stromtankstelle 1 und für deren Bedienung erforderlichen Anwendungen auf das Mobilfunkgerät 3 des Nutzers übertragen werden. Hierbei gestaltet sich beispielsweise folgender Ablauf:
- Der Nutzer meldet sich am Internetportal des Stromanbieters beziehungsweise Stromtankstellenbetreibers an.
- Dort gibt er im Rahmen der Eingabe der persönlichen Daten an, ein NFC-fähiges Mobilfunkgerät zu besitzen und gibt dessen MSISDN an.
- Der Stromanbieter beziehungsweise Stromtankstellenbetreiber beauftragt seinen Trusted Service Manager, das Mobilfunkgerät 3 des Kunden zu provisionieren.
- Der Trusted Service Manager provisioniert das Mobilfunkgerät 3 des Kunden beziehungsweise Nutzers über das Netz des Mobilfunkanbieters indem er eine entsprechende Authentifizierungsanwendung auf die auch als Token 5 gemäß der Erfindung fungierende UICC des Mobilfunkgeräts 3 überträgt. Danach kann der Nutzer sein NFC-fähiges Mobilfunkgerät 3 mit Javacard-UICC als Authentifizierungstoken gegenüber der Stromtankstelle nutzen.

### Verwendete Bezugszeichen

- 1: Stromtankstelle
- 2: Backendeinrichtungen
- 3: Mobilfunkgerät
- 4: Netzwerk
- 5: Token
- 6: Einrichtungen eines Mobilfunkbetreibers

## Patentansprüche

1. Ladesystem zur Aufladung von Akkumulatoren, welches aus einer Stromtankstelle (1), Bedienmitteln zur Bedienung der Stromtankstelle, Anzeigemitteln zur Anzeige von Statusinformationen zu einem Ladevorgang, aus computerbasierten, mit der Stromtankstelle (1) in einer Wirkverbindung stehenden Backendeinrichtungen (2) zur Tarifierung des zur Aufladung eines Akkumulators über die Stromtankstelle bezogenen Stroms und aus einem Netzwerk (4) für den Datenaustausch zwischen den Backendeinrichtungen (2) und der Stromtankstelle (1) besteht, wobei die Stromtankstelle (1) mindestens eine Steckdose zur elektrischen Verbindung mit einem unter Nutzung der Stromtankstelle (1) aufzuladenden Akkumulator aufweist, **dadurch gekennzeichnet, dass** es sich bei den Bedienmitteln und/oder bei den Anzeigemitteln um ein internetfähiges Mobilfunkgerät (3) handelt oder diese zumindest teilweise durch ein solches Mobilfunkgerät (3) ausgebildet sind.

2. Ladesystem nach Anspruch 1, **dadurch gekennzeichnet, dass** das genannte Mobilfunkgerät (3) eine Fernbedienungseinheit für die Stromtankstelle (1) ausbildet, mittels welcher diese, eine Verfügbarkeit des den Internetzugang für das Mobilfunkgerät (3) ermöglichenden Netzes vorausgesetzt, von beliebig entfernter Stelle bedienbar ist.

3. Ladesystem nach Anspruch 1 oder 2, **dadurch gekennzeichnet, dass** die Stromtankstelle (1) für einen jeweiligen Ladevorgang mittels des Mobilfunkgerätes (3) bezüglich der Ladearameter des Ladevorgangs und/oder der Begrenzung der zu beziehenden Ladestrommenge konfigurierbar ist.

4. Ladesystem nach einem der Ansprüche 1 bis 3, bei welchem die Bedienung der Stromtankstelle (1) zum Aufladen eines Akkumulators an eine Autorisierung eines jeweiligen Nutzers gebunden ist, wofür sich der betreffende Nutzer mittels eines Token (5) an der dazu mit einer NFC-Schnittstelle für die Nahbereichskommunikation ausgestatteten Stromtankstelle zu authentifizieren hat, **dadurch gekennzeichnet, dass** das als Bedienmittel oder als Bestandteil der Bedienmittel fungierende Mobilfunkgerät (3) ebenfalls mit einer NFC-Schnittstelle ausgestattet ist und eine von dem Mobilfunkgerät in Form einer SIM-Karte aufgenommene UICC das für die Authentifizierung erforderliche Token (5) ausbildet, wobei hierzu mindestens eine Anwendung zur Nutzung transaktionsbasierter Dienste in Form von Programmanweisungen und zugehörigen Daten auf dieser UICC hinterlegt ist.

5. Ladesystem nach Anspruch 4, **dadurch gekennzeichnet, dass** in dieses elektronische Einrichtungen (6) mindestens eines Mobilfunknetzbetreibers eingebunden sind, durch welche die eine Authentifizierung zur Nutzung der Stromtankstelle (1) ermöglichende Anwendung auf die UICC des hierfür genutzten Mobilfunkgeräts (3) übertragen wird.

6. Ladesystem nach Anspruch 4 oder 5, **dadurch gekennzeichnet, dass** eine oder mehrere auf der UICC des Mobilfunkgeräts (3) gehaltene Anwendungen zur Nutzung transaktionsbasierter Dienste, als Bezahlanwendung für den bargeldlosen Zahlungsverkehr ausgebildet sind, so dass mittels des Mobilfunkgeräts (3) sowohl eine Authentifizierung zur Nutzung der Stromtankstelle (1) als auch die Authentifizierung zur bargeldlosen Bezahlung der jeweils von der Stromtankstelle (1) bezogenen Strommenge ermöglicht ist, wobei die Backendeinrichtungen (2) Einrichtungen für ein entsprechendes bargeldloses Bezahlsystem umfassen.

7. Ladesystem nach Anspruch 6, **dadurch gekennzeichnet, dass** auf der UICC des Mobilfunkgeräts (3) gehaltene Anwendungen für die Nutzung transaktionsbasierter Dienste zur Auswahl durch den Nutzer auf einem graphischen Benutzerinterface des Mobilfunkgerätes (3) als elektronische Brieftasche animiert werden, wobei eine zur Nutzung eines entsprechenden Dienstes zu verwendende, auf einem Display des graphischen Benutzerinterfaces graphisch symbolisierte Anwendung durch Antippen des gegebenenfalls berührungsempfindlich ausgebildeten Displays oder mittels eines anderen, mit dem Display des graphischen Benutzerinterfaces interagierenden Benutzerinterfaces des Mobilfunkgerätes (3) auswählbar ist.

8. Verfahren zur Interaktion zwischen einer Stromtankstelle (1) zur Aufladung von Akkumulatoren und einem Nutzer der betreffenden Stromtankstelle (1), **dadurch gekennzeichnet, dass** die Interaktion zumindest teilweise über ein von dem Nutzer mitgeführtes Mobilfunkgerät (3) erfolgt, wobei durch den Nutzer mittels des betreffenden Mobilfunkgeräts (3) Bedienvorgänge zur Nutzung der Stromtankstelle (1) ausgeführt werden und/oder während des Bestehens einer Verbindung zur zwischen der Stromtankstelle (1) und einem aufzuladenden Akkumulator Statusinformationen zum Ladevorgang auf das Mobilfunkgerät (3) des Nutzers übertragen werden oder über dieses abrufbar sind.

9. Verfahren nach Anspruch 8, **dadurch gekennzeichnet, dass** die Bedienung der Stromtankstelle (1) mittels des Mobilfunkgeräts (3) auch die Einstellung von Ladeparametern für einen Ladevorgang und/oder der Begrenzung der bei einem Ladevorgang insgesamt zu beziehenden Ladestrommenge umfasst.

10. Verfahren nach Anspruch 8 oder 9, **dadurch gekennzeichnet, dass** der Datenaustausch zwischen der Stromtankstelle (1) und dem Mobilfunkgerät (3) des jeweiligen Nutzers zumindest teilweise über ein Mobilfunknetz erfolgt.

11. Verfahren nach einem der Ansprüche 8 bis 10, **dadurch gekennzeichnet, dass** der Datenaustausch zwischen der Stromtankstelle (1) und dem Mobilfunkgerät (3) des jeweiligen Nutzers über an dem Mobilfunkgerät (3) und an der Stromtankstelle (1) ausgebildete NFC-Schnittstellen für die Nahbereichskommunikation erfolgt.

12. Verfahren nach Anspruch 11, wobei die Nutzung der Stromtankstelle (1) zur Aufladung eines Akkumulators nur dazu autorisierten Nutzern ermöglicht ist, welche sich hierzu gegenüber der Stromtankstelle (1) authentifizieren müssen, **dadurch gekennzeichnet, dass** sich ein Nutzer mittels seines dazu ausgebildeten Mobilfunkgeräts (3) gegenüber der Stromtankstelle (1) authentifiziert.

13. Verfahren nach Anspruch 12, **dadurch gekennzeichnet, dass** das Mobilfunkgerät (3) im Zusammenhang mit der Authentifizierung auch zur Bezahlung der bei einem Ladevorgang verbrauchten Strommenge verwendet wird.
